(19) Europäisches Patentamt / European Patent Office / Office européen des brevets

(11) EP 4 015 070 A1

(12) **EUROPEAN PATENT APPLICATION**

(43) Date of publication:
**22.06.2022 Bulletin 2022/25**

(21) Application number: **21180050.3**

(22) Date of filing: **17.06.2021**

(51) International Patent Classification (IPC):
***B01D 67/00*** *(2006.01)* ***B01D 53/22*** *(2006.01)*
***B01D 69/08*** *(2006.01)* ***B01D 71/02*** *(2006.01)*

(52) Cooperative Patent Classification (CPC):
**B01D 67/0067; B01D 53/228; B01D 69/08; B01D 71/021;** B01D 71/52; B01D 2053/223

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 IN 202011055507**

(71) Applicant: **SHPP Global Technologies B.V.**
**4612 PX Bergen op Zoom (NL)**

(72) Inventors:
- **SEKAR, Ananda Kumaran**
  **Bangalore 562125 (IN)**
- **CHOWDHURY, Rajesh**
  **Bangalore 562125 (IN)**

(74) Representative: **Balder IP Law, S.L.**
**Paseo de la Castellana 93**
**5a planta**
**28046 Madrid (ES)**

(54) **SELECTIVELY PERMEABLE MEMBRANE OBTAINED BY CARBONIZATION OF SULFONATED POLY(PHENYLENE ETHER) COPOLYMER**

(57) A selectively permeable membrane for separating carbon dioxide from methane in a gaseous stream, the membrane comprising a carbonization product of a sulfonated poly(phenylene ether) copolymer, wherein the membrane has: a carbon dioxide permeability of at least 60 x $10^{-6}$ $cm^3$ (STP)/$cm^2$·s cm Hg; a selectivity for carbon dioxide to methane of greater than 40, as measured at 50°C and 791 kPa; a methane slip of less than 0.6 vol%, based on total volume of methane input; a carbon dioxide recovery of greater than 75%; and a power consumption to produce a purified gaseous stream that is equivalent to less than 90 kJ/kg of natural gas in the purified gaseous stream, preferably, wherein the membrane further has a carbon footprint that is less than 75% of a carbon footprint of a comparable membrane that does not comprise the carbonization product of the sulfonated poly(phenylene ether) copolymer.

EP 4 015 070 A1

## Description

### BACKGROUND

Disclosed herein is a selectively permeable membrane for separating carbon dioxide from methane in a gaseous stream.

Polymer membranes can be used for gas separation, for example for the production of oxygen-enriched air, production of nitrogen-enriched streams for blanketing fuels and petrochemicals, separation of carbon dioxide or hydrogen sulfide from methane in natural gas, hydrogen recovery from ammonia plant purge streams, and removal of organic vapor from air or nitrogen.

A commercially viable gas separation membrane combines high selectivity for the desired gas, high permeation flux, or throughput, and a long service life. Permeation flux is a measure of volumetric gas flow through a membrane. The higher the permeation flux, the smaller the membrane area required to treat a given volume of gas. Separation factor is a measure of membrane selectivity for the gas pair to be separated. It is the ratio of the fluxes of the individual gases across the membrane. For example, for oxygen/nitrogen separations, the separation factor is the ratio of oxygen flux to nitrogen flux. Since selectivity can be inversely proportional to flux, it is desirable to increase the selectivity without adversely affecting flux. It is desirable to have gas separation membranes with long service lives under harsh conditions, for example high temperatures and exposure to corrosive gases, so that replacement costs are minimized. Many materials have been investigated for use in gas separation membranes.

U.S. Pat. No. 5,348,569 to Bikson et al. describes modified poly(phenylene ether) membranes for enhanced fluid separation. Poly(phenylene ether) resins were purified to remove low molecular weight components (leaving a number average molecular weight greater than 25,000), then sulfonated to yield the materials employed in the gas separation membrane.

There remains a need for an economical and environmentally sustainable membrane that is suitable for use in such applications as gas separation.

### BRIEF SUMMARY

Provided is a selectively permeable membrane for separating carbon dioxide from methane in a gaseous stream, the membrane comprising a carbonization product of a sulfonated poly(phenylene ether) copolymer, wherein the membrane has: a carbon dioxide permeability of at least 60 x $10^{-6}$ $cm^3$ (STP)/$cm^2 \cdot s$ cm Hg; a selectivity for carbon dioxide to methane of greater than 40, preferably 40 to 150, more preferably 50 to 150, as measured at 50°C and 791 kPa (100 psig) in single gas testing conditions; a methane slip of less than 0.6 vol%, preferably less than 0.5 vol%, more preferably less than 0.4 vol%, based on total volume of methane input; a carbon dioxide recovery of greater than 75%, preferably greater than 90% and more preferably greater than 95%; and a power consumption to produce a purified gaseous stream that is equivalent to less than 90 kJ/kg of natural gas (25 kWh per ton of natural gas), or less than 72 kJ/kg of natural gas (20 kWh per ton of natural gas), or less than 54 kJ/kg of natural gas (15 kWh per ton of natural gas) in the purified gaseous stream, preferably, wherein the membrane further has a carbon footprint that is less than 75%, or less than 80%, or less than 85% of a carbon footprint of a comparable membrane that does not comprise the carbonization product of the sulfonated poly(phenylene ether) copolymer.

Also provided is a method for separating carbon dioxide from methane in a gaseous stream, the method comprising: contacting a first side of the membrane with the gaseous stream; selectively permeating the gaseous stream through the membrane to form a permeate composition on a second side of the membrane, wherein a concentration of methane in the permeate composition is greater than a concentration of the methane in the gaseous stream and a concentration of carbon dioxide in the permeate composition is less than a concentration of carbon dioxide in the gaseous stream, and wherein a retentate comprises carbon dioxide.

An article comprising the described membrane is also provided.

### BRIEF DESCRIPTION OF THE DRAWING

Referring now to the drawing which is exemplary and not limiting.

FIGURE shows the cradle to gate carbon footprint of carbon dioxide capture using systems including a cellulose acetate membrane, a high-performance membrane, or a membrane derived from carbonization of a sulfonated poly(phenylene ether) copolymer of Example 2.

### DETAILED DESCRIPTION

Poly(phenylene ether)s are commercially attractive materials because of their unique combination of physical,

chemical, and electrical properties. Furthermore, the combination of poly(phenylene ether)s with other polymers or additives can provide blends which result in improved overall properties including chemical resistance, high strength, and high flow. As new commercial applications are explored, various sulfonated grades of poly(phenylene ether) materials are desired.

Disclosed herein is a selectively permeable membrane for separating carbon dioxide from methane in a gaseous stream. The membrane includes a carbonization product of a sulfonated poly(phenylene ether) copolymer. The sulfonated poly(phenylene ether) copolymers may be prepared using a scalable process that allows production of the sulfonated poly(phenylene ether) copolymers with different sulfonation levels. For example, the sulfonated poly(phenylene ether) copolymers may have a sulfonation level that ranges from 20 to 50%, as determined by proton nuclear magnetic resonance spectroscopy ($^1$H-NMR). The process provides a sulfonated poly(phenylene ether) copolymer up to sulfonation levels of 50%, while maintaining homogeneity, and preferably recovering and recycling the solvents.

Various and diverse articles may be prepared from membranes that include the carbonization product of the sulfonated poly(phenylene ether) copolymer. For example, the articles include ion exchange membranes for dialysis, proton conducting membranes for polymer electrolyte membrane fuel cells, ion exchange membranes for flow batteries, electrodialysis, microfiltration, ultrafiltration, nanofiltration hollow fiber membranes, reverse osmosis, hollow fiber membrane precursors for molecular sieves, carbon membranes for gas separation, precursors for carbon electrodes for fuel cells, carbon membrane reactors, and the like.

As used herein "carbonizing" or "carbonization" means to subject an organic substance to heat treatment to convert it into a carbon-containing material that is often referred to as a "carbonaceous material." Carbonization can be performed in an oxygen-free atmosphere (i.e., a vacuum atmosphere), an inert gas atmosphere (e.g., nitrogen gas or argon gas), or an atmosphere that includes an oxygen-containing gas. Carbonization is typically performed using a temperature ramp of 1°C/min or higher, preferably 3°C/min or higher, more preferably 5°C/min or higher. The upper limit to the carbonization time can be 10 hours, preferably 7 hours, more preferably 5 hours, although the upper limit is not limited to such times. A lower limit to the carbonization time can be a time sufficient for the organic substance to undergo carbonization to provide a carbon-containing material (i.e., a "carbonaceous material").

According to one or more aspects, the selectively permeable membrane for separating carbon dioxide from methane in a gaseous stream includes a carbonization product of a sulfonated poly(phenylene ether) copolymer, wherein the membrane has a carbon dioxide permeability of at least 60 x $10^{-6}$ $cm^3$ (STP)/$cm^2$·s cm Hg; a selectivity for carbon dioxide to methane of greater than 40, preferably 40 to 150, more preferably 50 to 150, as measured at 50°C and 791 kPa (100 psig) in single gas testing conditions; a methane slip of less than 0.6 vol%, preferably less than 0.5 vol%, more preferably less than 0.4 vol%, based on total volume of methane input; a carbon dioxide recovery of greater than 75%, preferably greater than 90% and more preferably greater than 95%; and a power consumption to produce a purified gaseous stream that is equivalent to less than 90 kJ/kg of natural gas (25 kWh per ton of natural gas), or less than 72 kJ/kg of natural gas (20 kWh per ton of natural gas), or less than 54 kJ/kg of natural gas (15 kWh per ton of natural gas) in the purified gaseous stream.

The membrane can have a carbon footprint that is less than 75%, or less than 80%, or less than 85% of a carbon footprint of a comparable membrane that does not comprise the carbonization product of the sulfonated poly(phenylene ether) copolymer. For example, the membrane can have a carbon footprint that is less than 75%, or less than 80%, or less than 85% of a carbon footprint of a high performance membrane that does not include the carbonization product of the sulfonated poly(phenylene ether) copolymer. As another example, the membrane can have a carbon footprint that is less than 40%, or less than 50%, or less than 60% of a carbon footprint of a membrane that includes cellulose acetate and does not include the carbonization product of the sulfonated poly(phenylene ether) copolymer.

As used herein, a "high performance membrane that does not include the carbonization product" refers to a carbon-containing membrane having a carbon dioxide permeance of 100 x $10^{-6}$ $cm^3$ (STP)/$cm^2$ scm Hg and a carbon dioxide selectivity of at least 40 from the feed including carbon dioxide and methane. For example, the high performance membrane that does not include the carbonization product can be a membrane described in Ind. Eng. Chem. Res. 2002, 41(6), pages 1393-1411, the entire content of which is incorporated by reference herein.

The membrane can include 20 to 90 wt%, or 30 to 80 wt%, or 40 to 80 wt% of the carbonization product of the sulfonated poly(phenylene ether) copolymer, based on the total weight of the membrane.

The sulfonated poly(phenylene ether) copolymer can include 49 to 89 mole percent (mol%), preferably 55 to 85 mol%, more preferably 60 to 80 mol% of a first repeating unit of formula (1); 10 to 50 mol%, preferably 15 to 40 mol%, more preferably 20 to 28 mol% of a second repeating unit of formula (2); and at least one of a third repeating unit of formula (3) or a fourth repeating unit of formula (4). For example, the sulfonated poly(phenylene ether) copolymer can include 49 to 89 mol%, preferably 55 to 85 mol%, more preferably 60 to 80 mol% of a first repeating unit of formula (1); 10 to 50 mol%, preferably 15 to 40 mol%, more preferably 20 to 28 mol% of a second repeating unit of formula (2); 1 mol% or less of a third repeating unit of formula (3); and 1 mol% or less of a fourth repeating unit of formula (4).

The repeating units of formula (1), formula (2), formula (3), and formula (4) have the following structures:

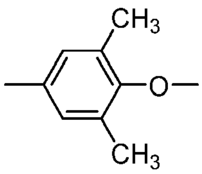
(1)

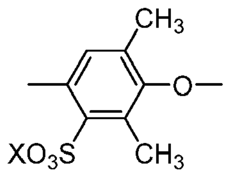
(2)

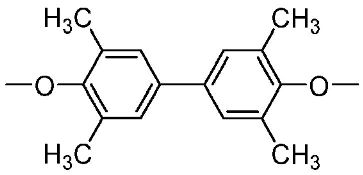
(3)

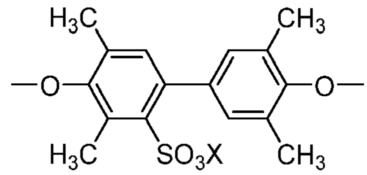
(4)

wherein, in formula (2) and formula (4), each X is independently hydrogen, sodium (Na), potassium (K), or $NH_4^+$ (ammonium), wherein each amount is based on total moles of repeating units in the sulfonated poly(phenylene ether) copolymer.

In some aspects, the sulfonated poly(phenylene ether) copolymer includes 49 to 89 mol%, or 55 to 85 mol%, or 60 to 80 mol% of a first repeating unit of formula (1); 10 to 50 mol%, or 15 to 40 mol%, or 20 to 28 mol% of a second repeating unit of formula (2); 0.01 to 1 mol% of a third repeating unit of formula (3); and 0.01 to 1 mol% of a fourth repeating unit of formula (4). For example, the sulfonated poly(phenylene ether) copolymer can include 49 to 89 mol%, or 55 to 85 mol%, or 60 to 80 mol% of a first repeating unit of formula (1); 10 to 50 mol%, or 15 to 40 mol%, or 20 to 28 mol% of a second repeating unit of formula (2); 0.05 to 1 mol% or 0.1 to 1 mol% of a third repeating unit of formula (3); and 0.05 to 1 mol% or 0.1 to 1 mol% of a fourth repeating unit of formula (4).

The sulfonated poly(phenylene ether) copolymer can be derived from a corresponding non-sulfonated poly(phenylene ether), which are referred to herein as "poly(phenylene ether)s" for the sake of convenience. The poly(phenylene ether) can be in the form of a homopolymer, a copolymer, a graft copolymer, an ionomer, a block copolymer, an oligomer, or a combination thereof.

Poly(phenylene ether)s include those having repeating structural units of the formula

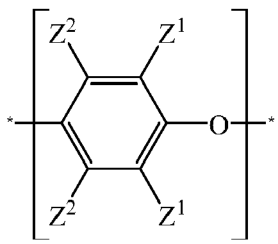

wherein each occurrence of $Z^1$ independently is halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each occurrence of $Z^2$ independently is hydrogen, halogen, unsubstituted or substituted $C_1$-$C_{12}$ hydrocarbyl, provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy, and wherein at least two carbon atoms separate the halogen and oxygen atoms. For example, $Z^1$ can be a di-n-butylaminomethyl group formed by reaction of a terminal 3,5-dimethyl-1,4-phenyl group with the di-n-butylamine component of an oxidative polymerization catalyst.

Exemplary poly(phenylene ether) can include 2,6-dimethyl-1,4-phenylene ether units, 2,3,6-trimethyl-1,4-phenylene ether units, or a combination thereof. For example, the poly(phenylene ether) can be a poly(2,6-dimethyl-1,4-phenylene ether). In some aspects, the poly(phenylene ether) includes a poly(2,6-dimethyl-1,4-phenylene ether) having an intrinsic viscosity of 0.03 to 2 deciliter per gram (dL/g). For example, the poly(phenylene ether) can have an intrinsic viscosity of 0.25 to 1.7 dL/g, or 0.2 to 1.5 dL/g, or 0.25 to 0.7 dL/g, 0.35 to 0.55 dL/g, or 0.35 to 0.50 dL/g, when measured at 25°C in chloroform using an Ubbelohde viscometer. The poly(phenylene ether) can have a number average molecular weight (Mn) of 500 to 7,000 grams per mole (g/mol), and a weight average molecular weight of 500 to 300,000 g/mol, as determined by gel permeation chromatography using polystyrene standards. The polymer may have monomodal or polymodal molecular weight distributions. The poly(phenylene ether) can have a polydispersity (ratio of weight average molecular weight to number average molecular weight) of 3 to 12. Within this range, the polydispersity can be greater than or equal to 4 or 5 and less than or equal to 10, 9, or 8.

In some embodiments, the poly(phenylene ether) can include molecules having aminoalkyl-containing end

group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present.

Poly(phenylene ether) as used herein can also refer to phenylene ether oligomers having a lower molecular weight. For example, the phenylene ether oligomer can include 2,6-dimethyl-1,4-phenylene ether units, 2,3,6-trimethyl-1,4-phenylene ether units, or a combination thereof. The phenylene ether oligomer can have an intrinsic viscosity of 0.03 to 0.13 deciliters per gram (dL/g), or 0.05 to 0.1 dL/g, or 0.1 to 0.15 dL/g, measured at 25°C in chloroform using an Ubbelohde viscometer. The phenylene ether oligomer can have a number average molecular weight ($M_n$) of 500 to 7,000 grams per mole (g/mol), and a weight average molecular weight ($M_W$) of 500 to 15,000 g/mol, as determined by gel permeation chromatography (GPC) using polystyrene standards. In some embodiments, the number average molecular weight ($M_N$) can be 750 to 4,000 g/mol, and the $M_W$ can be 1,500 to 9,000 g/mol, as determined by GPC using polystyrene standards.

The phenylene ether oligomer can be monofunctional or bifunctional. In some embodiments, the phenylene ether oligomer can be monofunctional. For example, it can have a functional group at one terminus of the polymer chains. The functional group can be, for example, a hydroxyl group or a (meth)acrylate group, preferably a (meth)acrylate group. In some embodiments, the phenylene ether oligomer comprises poly(2,6-dimethyl-1,4-phenylene ether).

In some embodiment, the phenylene ether oligomer can be bifunctional. For example, it can have functional groups at both termini of the oligomer chain. The functional groups can be, for example, hydroxyl groups or (meth)acrylate groups, preferably (meth)acrylate groups. Bifunctional polymers with functional groups at both termini of the polymer chains are also referred to as "telechelic" polymers. In some embodiments, the phenylene ether oligomer comprises a bifunctional phenylene ether oligomer having the structure

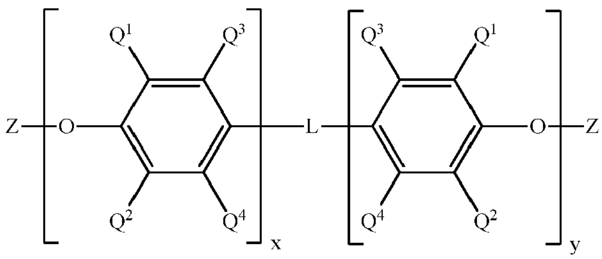

wherein $Q^1$ and $Q^2$ each independently comprise halogen, unsubstituted or substituted $C_1$-$C_{12}$ primary or secondary hydrocarbyl, $C_1$-$C_{12}$ hydrocarbylthio, $C_1$-$C_{12}$ hydrocarbyloxy, and $C_2$-$C_{12}$ halohydrocarbyloxy wherein at least two carbon atoms separate the halogen and oxygen atoms; each occurrence of $Q^3$ and $Q^4$ independently comprise hydrogen, halogen, unsubstituted or substituted $C_1$-$C_{12}$ primary or secondary hydrocarbyl, $C_1$-$C_{12}$ hydrocarbylthio, $C_1$-$C_{12}$ hydrocarbyloxy, and $C_2$-$C_{12}$ halohydrocarbyloxy wherein at least two carbon atoms separate the halogen and oxygen atoms; Z is hydrogen or (meth)acrylate; x and y are independently 0 to 30, specifically 0 to 20, more specifically 0 to 15, still more specifically 0 to 10, even more specifically 0 to 8, provided that the sum of x and y is at least 2, specifically at least 3, more specifically at least 4; and L has the structure

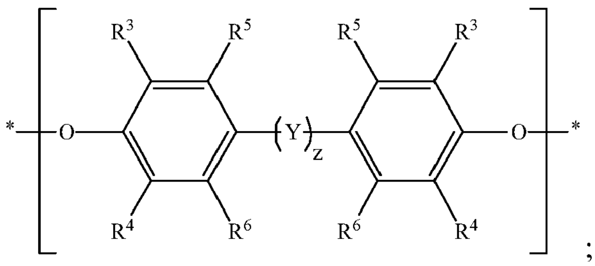

wherein each occurrence of $R^3$ and $R^4$ and $R^5$ and $R^6$ independently comprises hydrogen, halogen, unsubstituted or substituted $C_1$-$C_{12}$ primary or secondary hydrocarbyl, $C_1$-$C_{12}$ hydrocarbylthio, $C_1$-$C_{12}$ hydrocarbyloxy, and $C_2$-$C_{12}$ halohydrocarbyloxy wherein at least two carbon atoms separate the halogen and oxygen atoms; z is 0 or 1; and Y has a structure comprising

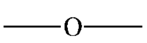, 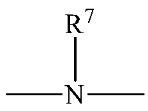, 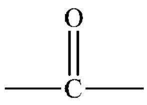, 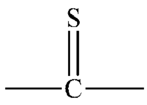, 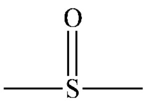, 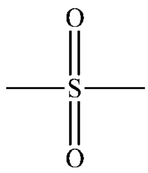, and 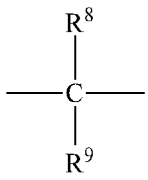

wherein each occurrence of $R^7$ independently comprises hydrogen and $C_1$-$C_{12}$ hydrocarbyl, and each occurrence of $R^8$ and $R^9$ independently comprises hydrogen, $C_1$-$C_{12}$ hydrocarbyl, and $C_1$-$C_6$ hydrocarbylene wherein $R^8$ and $R^9$ collectively form a $C_4$-$C_{12}$ alkylene group.

In an embodiment, the phenylene ether oligomer comprises a bifunctional phenylene ether oligomer having the structure

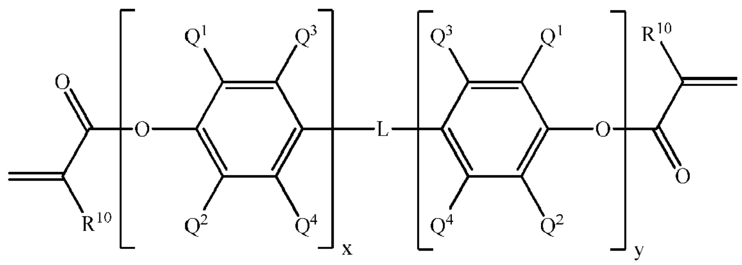

wherein $Q^1$, $Q^2$, $Q^3$, $Q^4$, L, x and y are as defined above $R^{10}$ is methyl or hydrogen

In the (meth)acrylate-terminated phenylene ether structure above, there are limitations on the variables x and y, which correspond to the number of phenylene ether repeating units at two different places in the bifunctional phenylene ether oligomer. In the structure, x and y are independently 0 to 30, specifically 0 to 20, more specifically 0 to 15, even more specifically 0 to 10, yet more specifically 0 to 8. The sum of x and y is at least 2, specifically at least 3, more specifically at least 4. A phenylene ether oligomer can be analyzed by proton nuclear magnetic resonance spectroscopy ($^1H$ NMR) to determine whether these limitations are met, on average. Specifically, $^1H$ NMR can distinguish between protons associated with internal and terminal phenylene ether groups, with internal and terminal residues of a polyhydric phenol, and with terminal residues as well. It is therefore possible to determine the average number of phenylene ether repeating units per molecule, and the relative abundance of internal and terminal residues derived from dihydric phenol.

In some embodiments the phenylene ether oligomer comprises a bifunctional phenylene ether oligomer having the structure

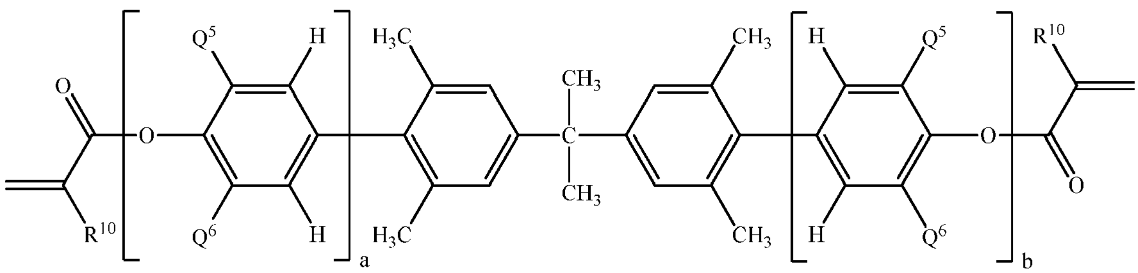

wherein each occurrence of $Q^5$ and $Q^6$ independently comprises methyl, di-n-butylaminomethyl, or morpholinomethyl; and each occurrence of a and b is independently 0 to 20, with the proviso that the sum of a and b is at least 2; and each occurrence of $R^{10}$ is methyl or hydrogen. An exemplary bifunctional phenylene ether oligomer includes NORYL SA9000, available from SABIC Innovative Plastics.

In some embodiments the phenylene ether oligomer comprises a bifunctional phenylene ether oligomer having the structure

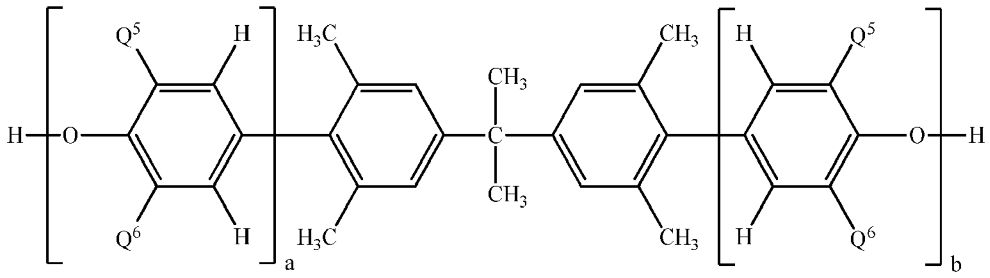

wherein each occurrence of $Q^5$ and $Q^6$ independently comprises methyl, di-n-butylaminomethyl, or morpholinomethyl; and each occurrence of a and b is independently 0 to 20, with the proviso that the sum of a and b is at least 2. An exemplary bifunctional phenylene ether oligomer includes NORYL™ Resin SA90, available from SABIC Innovative Plastics.

The poly(phenylene ether) can be a poly(phenylene ether) homopolymer, oligomer, or a combination thereof. The poly(phenylene ether) can preferably include a poly(2,6-dimethyl-1,4-phenylene ether).

The membrane can further include a carbonized additional polymer. The additional polymer can be a poly(phenylene ether) homopolymer (e.g., poly(2,6-dimethyl-1,4-phenylene ether)), a sulfonated poly(phenylene ether) homopolymer, polyethersulfone, polysulfone, poly(phenylene sulfone), or a combination thereof. The carbonized additional polymer can be included in the membrane in an amount of 0.1 to 20 wt%, or 1 to 10 wt%, based on the total weight of the membrane.

In some aspects, a hydrophilic polymer is excluded from the membrane. The excluded hydrophilic polymer can be, for example, polyacrylamide, poly(N,N-dimethylacrylamide), poly(vinyl alcohol), a poly(vinyl ether), a poly(vinyl ester), such as poly(vinyl acetate) or poly(vinyl propionate), a poly(vinyl aldehyde), such as poly(vinyl formal) or poly(vinyl butryal), a poly(vinyl amine), such as poly(4-vinylpyridine), poly(N-vinylpyrrolidone), poly(N-vinylimidazole), poly(4-acryloylmorpholine), a poly(oxazoline), poly(ethyleneamine), poly(ethylene oxide), poly(propylene oxide), a poly(ethylene oxide) monoether, a block copolymer of poly(ethylene oxide) and poly(propylene oxide), poly(alkoxy-capped poly(ethylene oxide) methacrylate), or a combination thereof. For example, the excluded hydrophilic polymer can be poly(N-vinylpyrrolidone), a poly(oxazoline), poly(ethylene oxide), poly(propylene oxide), a poly(ethylene oxide) monoether or monoester, a poly(propylene oxide) monoether or monoester, a block copolymer of poly(ethylene oxide) and poly(propylene oxide), polysorbate, cellulose acetate, or a combination thereof. In some aspects, the excluded hydrophilic copolymer includes poly(N-vinylpyrrolidone).

The process for the sulfonation of the poly(phenylene ether) includes dissolving the poly(phenylene ether) in a solvent (preferably in 1,2-dichloroethane and cosolvent) to form a solvent mixture. The mixing can be performed at temperatures of 10°C to 60°C, or 25°C to 40°C. The 1,2-dichloroethane is present in a sufficient quantity to dissolve the poly(phenylene ether). The solvent mixture can include 1 wt% to 20 wt%, preferably 5 wt% to 10 wt% of the poly(phenylene ether); 80 to 99 wt%, or 90 wt% to 95 wt% of 1,2-dichloroethane; and, 0 to 10 wt% (e.g., greater than zero), preferably greater than 0 to 6.0 wt%, or 1 to 10 wt%, or 2 to 6 wt% of the cosolvent based upon 100 wt% of the solvent mixture. The amount of cosolvent can be determined based upon the desired degree of sulfonation. For example, for sulfonation of 10 to 20%, the solvent mixture can include 1 to 20 wt%, or 5 to 10 wt% of the poly(phenylene ether); 80 wt% to 99 wt%, or 90 wt% to 95 wt% of 1,2-dichloroethane; and no cosolvent is necessary. However, for uniform sulfonation above 20%, the presence of cosolvent is desirable. For example, for a uniform sulfonation level of 25% to 50%, the solvent mixture can include 1 to 10 wt%, preferably 5 to 10 wt% of the poly(phenylene ether); 70 to 90 wt%, or 80 to 90 wt% of 1,2-dichloroethane, and 1 to 10 wt%, or 2 to 6 wt% of the cosolvent; based on 100 wt% of the solvent mixture.

The cosolvent can be tetrahydrofuran, acetone, ethanol, methanol, dimethylformamide, dimethylacetamide, dimethylsulfoxide, methylethylketone, diethyl ether, methylethyl sulfone, ethyl acetate, or tetramethylene sulfone

The solvent mixture can then be combined with a sulfonating agent that reacts with the poly(phenylene ether) to form the sulfonated poly(phenylene ether) copolymer. The sulfonation can be performed at a temperature of up to 85°C, e.g., 10 to 60°C, or 25°C to 40°C. The amount of sulfonating agent added to the solvent mixture can be 0.5 to 1 mole, or 0.25 to 0.9 moles, based upon a total 1 mole of poly(phenylene ether) that was dissolved in the solvent mixture. The specific amount of sulfonating agent added is dependent upon the desired level of sulfonation in the sulfonated reaction product. Desirably, the sulfonating agent is added slowly to the solvent mixture, e.g., added over a period of 15 minutes (min.) to 60 min., (e.g., over a period of 30 mins). Once the sulfonating agent is added to the solvent mixture, the solvent mixture can be stirred, e.g., for 60 to 210 mins, prior to proceeding to precipitation.

Once the poly(phenylene ether) has been sulfonated, the sulfonated poly(phenylene ether) can be precipitated from the solvent mixture using an anti-solvent mixture, e.g., containing di-ionized (DI) water. For example, at least one of hexane or heptane can be used, e.g., along with DI water, to precipitate the sulfonated poly(phenylene ether) copolymer out of the solvent mixture. The solvent mixture can be added to the anti-solvent mixture, wherein the anti-solvent mixture

can be used in an amount sufficient to induce precipitation. For example, 100 grams (g) of solvent mixture can be added to 300 to 700g of the anti-solvent mixture with hexane to water weight ratios ranging from 0 to 1.15.

The precipitated sulfonated poly(phenylene ether) copolymer can be filtered, and optionally washed and dried. The filtrate can be diphasic with the 1,2-dichloroethane, cosolvent, and optionally organic(s) (e.g., hexane) that were part of the anti-solvent mixture, as the organic phase and water as the aqueous phase. The filtrate can be further processed to recover 1,2-dichloroethane, the cosolvent, water, or a combination thereof. Recovering these materials can comprise decanting the diphasic filtrate to form an aqueous stream and an organic stream. The organic stream can be further processed, e.g., distilled, to recover the 1,2-dichloroethane, the cosolvent, or both. The recovered materials can be recycled.

The membrane includes the carbonization product of the sulfonated poly(phenylene ether) copolymer. As a method of carbonization, the sulfonated poly(phenylene ether) copolymer can be heat treated in an inert (e.g., an inert nitrogen atmosphere), oxidative, or reductive atmosphere to carbonize and produce a shaped porous carbon membrane. The heat treatment is typically conducted at a temperature of from 250 to 1,000°C, or from 300 to 900° C, or from 300 to 800°C.

Also provided is a method for separating carbon dioxide from methane in a gaseous stream. The method includes contacting a first side of the membrane, which is derived from carbonization of the sulfonated poly(phenylene ether) copolymer, with the gaseous stream. The gaseous stream can be selectively permeated through the membrane to form a permeate composition on a second side of the membrane, wherein a concentration of methane in the permeate composition is greater than a concentration of the methane in the gaseous stream and a concentration of carbon dioxide in the permeate composition is less than a concentration of carbon dioxide in the gaseous stream, and wherein a retentate comprises carbon dioxide. The permeate, the retentate, or both the permeate and retentate can be collected.

The membrane has good sustainability and a long lifetime. In an aspect, the membrane can be contacted with a gaseous stream to selectively permeate a gaseous stream through the membrane over time. For example, one or more of carbon dioxide permeability, selectivity for carbon dioxide to methane, methane slip, or carbon dioxide recovery of the membrane after contacting carbon dioxide at 690 kilopascal (kPa; 6.9 bar) for at least 720 hours, preferably at least 1440 hours, more preferably at least 2160 hours, and permeating a feed composition comprising carbon dioxide and methane in a mole ratio of 1:1 at 35°C and 345 kPa (3.45 bar) for at least 720 hours, preferably at least 1440 hours, more preferably at least 2160 hours is at least 90% of the carbon dioxide permeability, 90% of the selectivity for carbon dioxide to methane, 90% of the methane slip, or 90% of the carbon dioxide recovery of the membrane before the contacting and selectively permeating. In other words, the membrane retains 90% of the original carbon dioxide permeability, original selectivity for carbon dioxide to methane, original methane slip, original carbon dioxide recovery, or a combination thereof under the stated conditions above.

The gaseous stream can include air, flue gas, digester gas, fermentation gas, sewage gas, natural gas, coal gas, synthesis gas, or a combination thereof. Preferably, the gaseous stream includes natural gas.

The gaseous stream can include two or more gas components, preferably wherein the gaseous stream includes carbon dioxide, methane, and at least one of hydrogen, carbon monoxide, sulfur dioxide, helium, hydrogen sulfide, nitrogen, oxygen, argon, hydrogen sulfide, nitrogen dioxide, nitrous oxide, nitric oxide, ammonia, a hydrocarbon of one to five carbon atoms, hydrogen chloride, or a combination thereof. More preferably, the gaseous stream includes carbon dioxide, methane, nitrogen, and at least one of a paraffin or an olefin

The membrane can be a porous membrane. The membrane can be in the form of a sheet, disc, spiral wound, plate and frame, hollow fiber, capillary, or tubular configuration.

The membrane can include a hollow carbon fiber derived from carbonization of a hollow fiber comprising the sulfonated poly(phenylene ether) copolymer. A hollow fiber can be made by coextruding through a spinneret comprising an annulus and a bore: a membrane-forming composition comprising the sulfonated poly(phenylene ether) copolymer dissolved in a suitable solvent through the annulus, and a first non-solvent composition through the bore, into a second non-solvent composition to form the hollow fiber. For example, a hollow fiber can be prepared by extruding a dope solution composition including the sulfonated poly(phenylene ether) copolymer and an organic solvent through an outer concentric ring of an annular die into a non-solvent while simultaneously pumping the non-solvent through an inner concentric bore of the annular die.

The organic solvent can be dimethylformamide, dimethyl acetamide, dimethylsulfoxide, or a combination thereof and the non-solvent is water, N-methylpyrrolidone, hexane, cyclohexane, carbon tetrachloride, carbon disulfide, benzene, toluene, chlorobenzene, dichloromethane, chloroform, diethyl ether, or a combination thereof.

The wall thickness of the hollow fiber can be 50 to 5,000 micrometers ($\mu$m). Within this range, the diameter can be 100 to 2,000 $\mu$m, or 10 to 200 $\mu$m, or 20 to 80 $\mu$m, or 20 to 60 $\mu$m, or 20 to 40 $\mu$m, or 20 to 35 $\mu$m. A separation module can comprise bundles of porous hollow fibers, such as 10 to 10,000 porous hollow fibers. The hollow fibers can be bundled longitudinally, potted in a curable resin on both ends, and encased in a pressure vessel to form the hollow fiber module. Hollow fiber modules can be mounted vertically or horizontally.

When the membrane is a porous membrane, the surface pore size can be 0.03 to 10 micrometers ($\mu$m), or

0.002 to 0.1 μm, or 0.001 to 0.002 μm.

Also provided is an article including the membrane disclosed herein. The membrane is useful for many different gas separation applications, including, but not limited to, providing of an enriched nitrogen stream for inerting of flammable fluids, perishable foodstuffs, and metal treating processes, providing an enriched oxygen stream for medical or industrial uses, fermentation processes, enhanced combustion processes, recovering carbon dioxide from light hydrocarbons, treating flue gases to remove nitrogen oxides and/or sulfur oxides, removing organic vapors from air, dehydrating air and natural gas, and the like. In addition, the membrane is useful for separating gases and/or vapors from mixtures of liquids or mixtures of liquids and gases using the membrane separation processes of membrane stripping or membrane distillation. In membrane stripping, a material permeating through or across the membrane is removed from the membrane as a gas or a vapor. In membrane distillation, the material permeating through or across the membrane is condensed and removed as a liquid.

Exemplary articles include an enclosure having a bundle of hollow carbon fibers derived from carbonization of hollow fibers including the sulfonated poly(phenylene ether) copolymer, wherein the enclosure comprises an inlet for introducing the gaseous stream and an outlet for withdrawing the purified gaseous stream.

This disclosure is further illustrated by the following examples, which are nonlimiting.

EXAMPLES

Example 1: Exemplary method of making sulfonated polyphenylene ether (sPPE)

A 3-necked round bottom glass flask equipped with a TEFLON stirrer, a reflux condenser, and a pressure equalized dropping funnel is maintained at 40°C. 10.0 g of NORYL PPO 646 poly(phenylene ether) resin is dissolved in a 1,2-dichloroethane and ethyl acetate (EA) (179.5 g:11.7 g) mixture until a homogenous clear solution is obtained (ca. 60 minutes). The temperature is maintained at 40°C. 5.85 g of chlorosulfonic acid is transferred to a pressure equalized dropping funnel and the same is added into the 1,2-dichloroethane-ethylacetate solution mixture under vigorous stirring over 30 minutes. A nitrogen purge is maintained throughout with rapid stirring. Stirring is continued for an additional 210 minutes at 40°C. The reaction mass is subsequently transferred along with 1,200 mL of deionized water (e.g., as the anti-solvent mixture) to a 2 L baffled precipitation vessel maintained at 10°C and fitted with a 4-blade agitator (about 60 mm diameter), running at 1,000 revolutions per minute (rpm) giving a tip-speed of 3.14 meters per second (m/s). The temperature is subsequently increased to 25°C after 1 hour. The stirring is continued for a total of 30 minutes. This is followed by filtration. The residue (sulfonated PPE) is then re-slurried in a deionized water/hexane (500 mL:70 mL) mixture and re-filtered. The residue is washed thoroughly with deionized water until a neutral pH was achieved. The sulfonated material is then dried under vacuum for 48 hours at room temperature.

The industrial process for the manufacture of sPPE includes dissolution of poly(phenylene ether) in 1,2-dichloroethane (EDC) and ethyl acetate (EA) (basis of 100 kg/hr of poly(phenylene ether)) in the amount of 89.2 wt% EDC, 4.97 wt% poly(phenylene ether) and 5.83 wt% ethyl acetate, based upon a total weight of the poly(phenylene ether), EA, and EDC, with a residence time of 10 to 15 minutes. Poly(phenylene ether) reacts is reacted with chlorosulfonic acid (58.5 kg/hr) with a mole ratio of chlorosulfonic acid to poly(phenylene ether) of 0.613. The reaction temperature is at 40°C with the residence time of 30 minutes. The HCl gas which is evolved during the process is vented from the reactor and scrubbed using alkali scrubber. The reaction mass from the reactor is precipitated in a precipitation vessel with water. The precipitated mass is filtered and the wet sPPE is purified by passing through two wash vessels and dried in a drier at a temperature of 50 to 60°C at reduced pressure of 7.99 kPa. The filtrate is biphasic with 1,2-dichloroethane and EA being the organic phase and water as an aqueous phase. Decanting (liquid-liquid separation) is done to separate the EDC and EA from water followed by distillation to separate EDC and EA. Both EDC and EA forms heterogeneous azeotrope with water. The distillation operation separates EDC and EA as a distillate which can be recycled and the organic heavies at the bottom. The recycle efficiency for water and solvent is more than 90%. The sulfonated product once isolated had a degree of sulfonation that was 31.42%. The entire process was simulated in Aspen to understand the recovery and recycle.

The degree of sulfonation (DS) (also referred to as sulfonation level) was determined by nuclear magnetic resonance spectroscopy (NMR): The samples are dissolved in dimethyl sulfoxide-$d_6$ (DMSO-$d_6$) (with the help of overnight shaking in a horizontal shaker), 32 scans were averaged with 5 seconds delay. In case of undissolved portions, the solvent vial was sonicated in a water bath at 45°C for 15-30 minutes.

The degree of sulfonation can be calculated either from the aliphatic or aromatic protons:

considering aromatic protons (Equation 1):

$$DS\% = \frac{I3}{(0.5 * I2) + I3}$$

Equation 1

considering aliphatic protons (Equation 2):

$$DS\% = \frac{2 * I6}{I6 + I7}$$

Equation 2

wherein I is the integration value of the $^{1}$H-NMR chemical shifts ($\delta$) at a given parts per million (ppm).

Example 2

A hollow fiber carbon membrane is derived from the sulfonated poly(phenylene ether) copolymer of Example 1.

Table 1 shows the properties for hollow fiber carbon membranes that is derived from the carbonization product of the sulfonated poly(phenylene ether) and for several comparative hollow fiber carbon membranes.

Table 1

| Parameters | Unit | Cellulose acetate membrane | High performance membrane | Example 1 |
|---|---|---|---|---|
| Incoming methane | MM SCFD | 10 | 10 | 10 |
| Incoming methane | N $m^3$ / day | 280000 | 280000 | 280000 |
| Incoming methane | TPY[a] | 73920 | 73920 | 73920 |
| Output methane | MM SCFD | 8.9 | 9.1 | 9.1 |
| Output methane | N $m^3$ / day | 249200 | 254800 | 254800 |
| Output methane | TPY[a] | 65788.8 | 67267.2 | 67514.8 |
| Permeate gas | MM SCFD | 1.1 | 0.9 | 0.9 |
| Methane conc. of permeate gas | %wt. | 22.3 | 6.7 | 3.0 |
| Methane loss | TPY[a] | 1813.3 | 445.7 | 198.1 |
| % Methane loss | % | 2.4 | 0.6 | 0.3 |
| Compressor load | HP[b] | 547 | 346 | 173 |
| Energy consumption per ton NG[b] | kWh/ton | 44.2 | 27.9 | 14.0 |
| Membrane area | $m^2$ | 4290 | 2540 | 635 |
| $CO_2$ flux | $10^{-6}$ $cm^3$ (STP)/($cm^2$. scm Hg) | 50 | 100 | 100 |
| $CO_2$ / methane selectivity | $CU_2/CH_4$ | 15 | 40 | 90 |
| Selectivity improvement[c] | % | 0 | 2.7 | 6 |
| Flux improvement[c] | % | 0 | 2.0 | - |
| Reduction in $CH_4$ loss[c] | % | 0 | 75.4 | 75.4 |
| $CO_2$ captured | TPY[a] | 6317.9 | 6207.1 | 6207.1 |
| $CO_2$ in conditioned NG[b] | TPY[a] | 1315.8 | 1345.3 | 1350.3 |

(continued)

| Parameters | Unit | Cellulose acetate membrane | High performance membrane | Example 1 |
|---|---|---|---|---|
| Total $CO_2$ in input NG[b] | TPY[a] | 7633.7 | 7552.4 | 7552.4 |
| $CO_2$ conc. in input NG[b] | Wt% | 10.3 | 10.2 | 10.2 |
| [a] TPY is tons per year; [b]NG is natural gas; [c] the improvement and reduction are relative to the cellulose acetate membrane. | | | | |

The FIGURE shows the cradle to gate carbon footprint of purified methane that is enabled by carbon dioxide capture using a cellulose acetate membrane, a high-performance membrane, or a membrane derived from carbonization of a sulfonated poly(phenylene ether) copolymer (i.e., Example 2). The FIGURE was generated using the values in Table 1. As indicated in the FIGURE, the carbon footprint of purified methane is considerably less for sulfonated poly(phenylene) based membrane in comparison to cellulose acetate and high performance membranes.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

The present method is further defined by the following aspects.

Aspect 1: A selectively permeable membrane for separating carbon dioxide from methane in a gaseous stream, the membrane comprising a carbonization product of a sulfonated poly(phenylene ether) copolymer, wherein the membrane has: a carbon dioxide permeability of at least 60 x $10^{-6}$ $cm^3$ (STP)/$cm^2 \cdot s$ cm Hg; a selectivity for carbon dioxide to methane of greater than 40, preferably 40 to 150, more preferably 50 to 150, as measured at 50°C and 791 kPa (100 psig) in single gas testing conditions; a methane slip of less than 0.6 vol%, preferably less than 0.5 vol%, more preferably less than 0.4 vol%, based on total volume of methane input; a carbon dioxide recovery of greater than 75%, preferably greater than 90% and more preferably greater than 95%; and a power consumption to produce a purified gaseous stream that is equivalent to less than 90 kJ/kg of natural gas (25 kWh per ton of natural gas), or less than 72 kJ/kg of natural gas (20 kWh per ton of natural gas), or less than 54 kJ/kg of natural gas (15 kWh per ton of natural gas) in the purified gaseous stream, preferably, wherein the membrane further has a carbon footprint that is less than 75%, or less than 80%, or less than 85% of a carbon footprint of a comparable membrane that does not comprise the carbonization product of the sulfonated poly(phenylene ether) copolymer.

Aspect 2. The membrane of Aspect 1, wherein the membrane comprises 20 to 90 wt%, or 30 to 80 wt%, or 40 to 80 wt% of the carbonization product of the sulfonated poly(phenylene ether) copolymer, based on the total weight of the membrane.

Aspect 3. The membrane of Aspect 1 or 2, wherein the membrane comprises a hollow carbon fiber derived from carbonization of a hollow fiber comprising the sulfonated poly(phenylene ether) copolymer.

Aspect 4. The membrane of any one of the preceding Aspects, further comprising a carbonized additional polymer, preferably wherein the additional polymer is a poly(phenylene ether) homopolymer, a sulfonated poly(phenylene ether) homopolymer, polyethersulfone, polysulfone, poly(phenylene sulfone), or a combination thereof.

Aspect 5. The membrane of any one of the preceding Aspects, wherein the carbonization product is prepared by heating the sulfonated poly(phenyl ether) copolymer under conditions effective to provide a pyrolysis product of the sulfonated poly(phenyl ether) copolymer.

Aspect 6. The membrane of any one of the preceding Aspects, wherein the sulfonated poly(phenylene ether) copolymer comprises: 49 to 89 mol%, preferably 55 to 85 mol%, more preferably 60 to 80 mol% of a first repeating unit of formula (1):

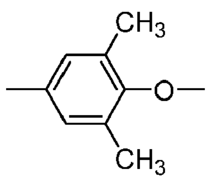

(1);

10 to 50 mol%, preferably 15 to 40 mol%, more preferably 20 to 28 mol% of a second repeating unit of formula (2):

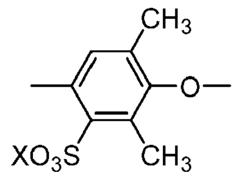 (2);

1 mol% or less of a third repeating unit of formula (3):

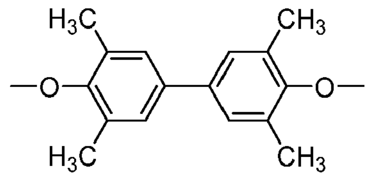 (3);

and 1 mol% or less of a fourth repeating unit of formula (4):

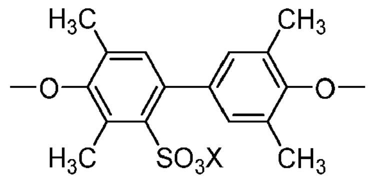 (4),

wherein each X is independently hydrogen, sodium, potassium, or $NH_4^+$, and wherein each amount is based on total moles of repeating units in the sulfonated poly(phenylene ether) copolymer.

Aspect 7. The membrane of any one of the preceding Aspects, wherein the sulfonated poly(phenylene ether) copolymer has a sulfonation level of 20 to 50%, as determined by proton nuclear magnetic resonance spectroscopy, preferably wherein the sulfonation level is uniform, as determined by proton nuclear magnetic resonance spectroscopy.

Aspect 8. The membrane of any one of the preceding Aspects, wherein the sulfonated poly(phenylene ether) copolymer is prepared by a method comprising: dissolving a poly(phenylene ether) in a mixture of 1,2-dichloroethane, and preferably a cosolvent, to form a solvent mixture; and combining a sulfonating agent with the solvent mixture, wherein the sulfonating agent reacts with the poly(phenylene ether) to form the sulfonated poly(phenylene ether) copolymer, optionally, wherein the method further comprises precipitating the sulfonated poly(phenylene ether) copolymer; and filtering the precipitated sulfonated poly(phenylene ether) copolymer, preferably wherein the sulfonated poly(phenylene ether) has a uniform sulfonation level.

Aspect 9. The membrane of Aspect 8, wherein the solvent mixture comprises the cosolvent, and wherein the cosolvent comprises at least one of tetrahydrofuran, acetone, ethanol, methanol, dimethylformamide, dimethylacetamide, dimethylsulfoxide, methylethylketone, diethyl ether, methylethyl sulfone, ethyl acetate, or tetramethylene sulfone, preferably wherein the cosolvent that is tetrahydrofuran, acetone, ethanol, methanol, dimethylformamide, dimethylacetamide, dimethylsulfoxide, methylethylketone, diethyl ether, methylethyl sulfone, ethyl acetate, or tetramethylene sulfone, or a combination thereof, more preferably wherein the cosolvent comprises at least one of ethyl acetate or tetramethylene sulfone.

Aspect 10. The membrane of Aspect 8 or 9, wherein the solvent mixture comprises: 1 to 10 wt%, preferably 5 to 10 wt%, of the poly(phenylene ether); 70 to 90 wt%, preferably 80 to 90 wt% of the 1,2-dichloroethane; and 1 to 10 wt%, preferably 2 to 6 wt% of the cosolvent, wherein weight percentages are based upon 100 wt% of the solvent mixture.

Aspect 11. A method for separating carbon dioxide from methane in a gaseous stream, the method comprising: contacting a first side of the membrane of any one of Aspects 1 to 10 with the gaseous stream; and selectively permeating the gaseous stream through the membrane to form a permeate composition on a second side of the membrane, wherein a concentration of methane in the permeate composition is greater than a concentration of the methane in the gaseous stream and a concentration of carbon dioxide in the permeate composition is less than a concentration of carbon dioxide in the gaseous stream, and wherein a retentate comprises carbon dioxide.

Aspect 12. The method of Aspect 11, further comprising repeating the contacting and the selectively permeating continuously or near continuously for at least 720 hours, preferably at least 1440 hours, more preferably at least 2160 hours, wherein one or more of carbon dioxide permeability, selectivity for carbon dioxide to methane, methane slip, or carbon dioxide recovery of the membrane after contacting carbon dioxide at 690 kPa for at least 720 hours, preferably at least 1440 hours, more preferably at least 2160 hours, and permeating a feed composition comprising carbon dioxide

and methane in a mole ratio of 1:1 at 35°C and 345 kPa for at least 720 hours, preferably at least 1440 hours, more preferably at least 2160 hours is at least 90% of the carbon dioxide permeability, the selectivity for carbon dioxide to methane, the methane slip, or the carbon dioxide recovery of the membrane before the contacting and selectively permeating.

Aspect 13. The method of Aspect 11 or 12 wherein the gaseous stream comprises two or more gas components, preferably wherein the gaseous stream comprises carbon dioxide, methane, and at least one of hydrogen, carbon monoxide, sulfur dioxide, helium, hydrogen sulfide, nitrogen, oxygen, argon, hydrogen sulfide, nitrogen dioxide, nitrous oxide, nitric oxide, ammonia, a hydrocarbon of one to five carbon atoms, hydrogen chloride, or a combination thereof; more preferably wherein the gaseous stream comprises carbon dioxide, methane, nitrogen, and at least one of a paraffin or an olefin.

Aspect 14. The method of any one of Aspects 11 to 13, wherein the membrane comprises a hollow carbon fiber derived from carbonization of a hollow fiber comprising the sulfonated poly(phenylene ether) copolymer, and wherein the method further comprises extruding a dope solution composition comprising the sulfonated poly(phenylene ether) copolymer and an organic solvent through an outer concentric ring of an annular die into a non-solvent while simultaneously pumping the non-solvent through an inner concentric bore of the annular die, preferably wherein the organic solvent is dimethylformamide, dimethyl acetamide, dimethylsulfoxide, or a combination thereof and the non-solvent is water, N-methylpyrrolidone, hexane, cyclohexane, carbon tetrachloride, carbon disulfide, benzene, toluene, chlorobenzene, dichloromethane, chloroform, diethyl ether, or a combination thereof.

Aspect 15. An article comprising the membrane of any one of Aspects 1 to 10.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

As used herein "uniform" refers to a "uniform sulfonation level", which means the same degree of sulfonation across the isolated mass of the sulfonated copolymer product as determined by proton nuclear magnetic resonance ($^1$H-NMR) spectroscopy of at least 5 small samples taken from the entire product mass.

As used herein "carbon footprint" refers to the total greenhouse gas emission caused directly and indirectly by a product, process, or event. Carbon footprint can be measured in tons of carbon dioxide equivalent. "Low carbon footprint" or "reduced carbon footprint" means having <85%, or <82%, or <75%, or <70%, or <60%, or <50%, or <30% of the carbon footprint of a substitute product, process, or event.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl," whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight

chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro ($-NO_2$), cyano (-CN), hydroxy (-OH), halogen, thiol (-SH), thiocyano (-SCN), $C_{1-6}$ alkyl, $C_{2-6}$ alkenyl, $C_{2-6}$ alkynyl, $C_{1-6}$ haloalkyl, $C_{1-9}$ alkoxy, $C_{1-6}$ haloalkoxy, $C_{3-12}$ cycloalkyl, $C_{5-18}$ cycloalkenyl, $C_{6-12}$ aryl, $C_{7-13}$ arylalkyl, $C_{7-12}$ alkylaryl, $C_{4-12}$ heterocycloalkyl, $C_{3-12}$ heteroaryl, $C_{1-6}$ alkyl sulfonyl ($-S(=O)_2$-alkyl), $C_{6-12}$ arylsulfonyl ($-S(=O)_2$-aryl), or tosyl ($CH_3C_6H_4SO_2-$), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

As used herein a "sulfonated" molecule carries at least one sulfonate (or also designated sulfo) residue of the type $-SO_3H$, or the corresponding salt form thereof of the type $-SO_3^-M^+$, wherein M is Li, Na, K, Ca, Mg, or ammonium.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A selectively permeable membrane for separating carbon dioxide from methane in a gaseous stream, the membrane comprising a carbonization product of a sulfonated poly(phenylene ether) copolymer, wherein the membrane has:

   a carbon dioxide permeability of at least 60 x $10^{-6}$ $cm^3$ (STP)/$cm^2$·s cm Hg;
   a selectivity for carbon dioxide to methane of greater than 40, preferably 40 to 150, more preferably 50 to 150, as measured at 50°C and 791 kPa (100 psig) in single gas testing conditions;
   a methane slip of less than 0.6 vol%, preferably less than 0.5 vol%, more preferably less than 0.4 vol%, based on total volume of methane input;
   a carbon dioxide recovery of greater than 75%, preferably greater than 90% and more preferably greater than 95%; and
   a power consumption to produce a purified gaseous stream that is equivalent to less than 90 kJ/kg of natural gas (25 kWh per ton of natural gas), or less than 72 kJ/kg of natural gas (20 kWh per ton of natural gas), or less than 54 kJ/kg of natural gas (15 kWh per ton of natural gas) in the purified gaseous stream,
   preferably, wherein the membrane further has a carbon footprint that is less than 75%, or less than 80%, or less than 85% of a carbon footprint of a comparable membrane that does not comprise the carbonization product of the sulfonated poly(phenylene ether) copolymer.

2. The membrane of claim 1, wherein the membrane comprises 20 to 90 wt%, or 30 to 80 wt%, or 40 to 80 wt% of the carbonization product of the sulfonated poly(phenylene ether) copolymer, based on the total weight of the membrane.

3. The membrane of claim 1 or 2, wherein the membrane comprises a hollow carbon fiber derived from carbonization of a hollow fiber comprising the sulfonated poly(phenylene ether) copolymer.

4. The membrane of any one of the preceding claims, further comprising a carbonized additional polymer, preferably wherein the additional polymer is a poly(phenylene ether) homopolymer, a sulfonated poly(phenylene ether) homopolymer, polyethersulfone, polysulfone, poly(phenylene sulfone), or a combination thereof.

5. The membrane of any one of the preceding claims, wherein the carbonization product is prepared by heating the sulfonated poly(phenyl ether) copolymer under conditions effective to provide a pyrolysis product of the sulfonated poly(phenyl ether) copolymer.

6. The membrane of any one of the preceding claims, wherein the sulfonated poly(phenylene ether) copolymer comprises:

49 to 89 mol%, preferably 55 to 85 mol%, more preferably 60 to 80 mol% of a first repeating unit of formula (1):

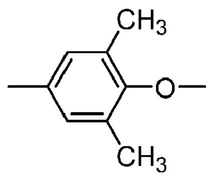 (1);

10 to 50 mol%, preferably 15 to 40 mol%, more preferably 20 to 28 mol% of a second repeating unit of formula (2):

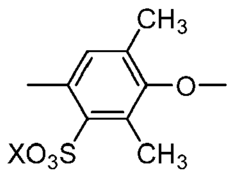 (2);

1 mol% or less of a third repeating unit of formula (3):

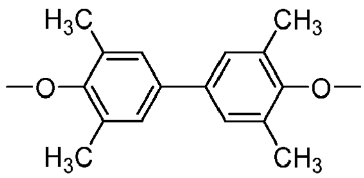 (3);

and
1 mol% or less of a fourth repeating unit of formula (4):

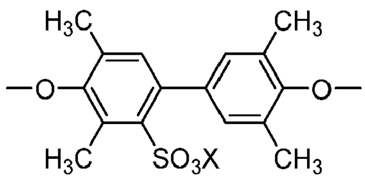 (4),

wherein each X is independently hydrogen, sodium, potassium, or $NH_4^+$, and
wherein each amount is based on total moles of repeating units in the sulfonated poly(phenylene ether) copolymer.

**7.** The membrane of any one of the preceding claims, wherein the sulfonated poly(phenylene ether) copolymer has a sulfonation level of 20 to 50%, as determined by proton nuclear magnetic resonance spectroscopy, preferably wherein the sulfonation level is uniform, as determined by proton nuclear magnetic resonance spectroscopy.

**8.** The membrane of any one of the preceding claims, wherein the sulfonated poly(phenylene ether) copolymer is prepared by a method comprising:

dissolving a poly(phenylene ether) in a mixture of 1,2-dichloroethane, and preferably a cosolvent, to form a solvent mixture; and
combining a sulfonating agent with the solvent mixture, wherein the sulfonating agent reacts with the poly(phenylene ether) to form the sulfonated poly(phenylene ether) copolymer,
optionally, wherein the method further comprises precipitating the sulfonated poly(phenylene ether) copolymer; and filtering the precipitated sulfonated poly(phenylene ether) copolymer, preferably wherein the sulfonated poly(phenylene ether) has a uniform sulfonation level.

**9.** The membrane of claim 8, wherein the solvent mixture comprises the cosolvent, and wherein the cosolvent comprises

at least one of tetrahydrofuran, acetone, ethanol, methanol, dimethylformamide, dimethylacetamide, dimethylsulfoxide, methylethylketone, diethyl ether, methylethyl sulfone, ethyl acetate, or tetramethylene sulfone, preferably wherein the cosolvent that is tetrahydrofuran, acetone, ethanol, methanol, dimethylformamide, dimethylacetamide, dimethylsulfoxide, methylethylketone, diethyl ether, methylethyl sulfone, ethyl acetate, or tetramethylene sulfone, or a combination thereof, more preferably wherein the cosolvent comprises at least one of ethyl acetate or tetramethylene sulfone.

**10.** The membrane of claims 8 or 9, wherein the solvent mixture comprises:

1 to 10 wt%, preferably 5 to 10 wt%, of the poly(phenylene ether);
70 to 90 wt%, preferably 80 to 90 wt% of the 1,2-dichloroethane; and
1 to 10 wt%, preferably 2 to 6 wt% of the cosolvent,

wherein weight percentages are based upon 100 wt% of the solvent mixture.

**11.** A method for separating carbon dioxide from methane in a gaseous stream, the method comprising:

contacting a first side of the membrane of any one of claims 1 to 10 with the gaseous stream; and
selectively permeating the gaseous stream through the membrane to form a permeate composition on a second side of the membrane,
wherein a concentration of methane in the permeate composition is greater than a concentration of the methane in the gaseous stream and a concentration of carbon dioxide in the permeate composition is less than a concentration of carbon dioxide in the gaseous stream, and
wherein a retentate comprises carbon dioxide.

**12.** The method of claim 11, further comprising repeating the contacting and the selectively permeating continuously or near continuously for at least 720 hours, preferably at least 1440 hours, more preferably at least 2160 hours, wherein one or more of carbon dioxide permeability, selectivity for carbon dioxide to methane, methane slip, or carbon dioxide recovery of the membrane after contacting carbon dioxide at 690 kPa for at least 720 hours, preferably at least 1440 hours, more preferably at least 2160 hours, and permeating a feed composition comprising carbon dioxide and methane in a mole ratio of 1:1 at 35°C and 345 kPa for at least 720 hours, preferably at least 1440 hours, more preferably at least 2160 hours is at least 90% of the carbon dioxide permeability, the selectivity for carbon dioxide to methane, the methane slip, or the carbon dioxide recovery of the membrane before the contacting and selectively permeating.

**13.** The method of claim 11 or 12 wherein the gaseous stream comprises two or more gas components, preferably wherein the gaseous stream comprises carbon dioxide, methane, and at least one of hydrogen, carbon monoxide, sulfur dioxide, helium, hydrogen sulfide, nitrogen, oxygen, argon, hydrogen sulfide, nitrogen dioxide, nitrous oxide, nitric oxide, ammonia, a hydrocarbon of one to five carbon atoms, hydrogen chloride, or a combination thereof; more preferably wherein the gaseous stream comprises carbon dioxide, methane, nitrogen, and at least one of a paraffin or an olefin.

**14.** The method of any one of claims 11 to 13, wherein the membrane comprises a hollow carbon fiber derived from carbonization of a hollow fiber comprising the sulfonated poly(phenylene ether) copolymer, and
wherein the method further comprises extruding a dope solution composition comprising the sulfonated poly(phenylene ether) copolymer and an organic solvent through an outer concentric ring of an annular die into a non-solvent while simultaneously pumping the non-solvent through an inner concentric bore of the annular die,
preferably wherein the organic solvent is dimethylformamide, dimethyl acetamide, dimethylsulfoxide, or a combination thereof and the non-solvent is water, N-methylpyrrolidone, hexane, cyclohexane, carbon tetrachloride, carbon disulfide, benzene, toluene, chlorobenzene, dichloromethane, chloroform, diethyl ether, or a combination thereof.

**15.** An article comprising the membrane of any one of claims 1 to 10.

FIG. 1

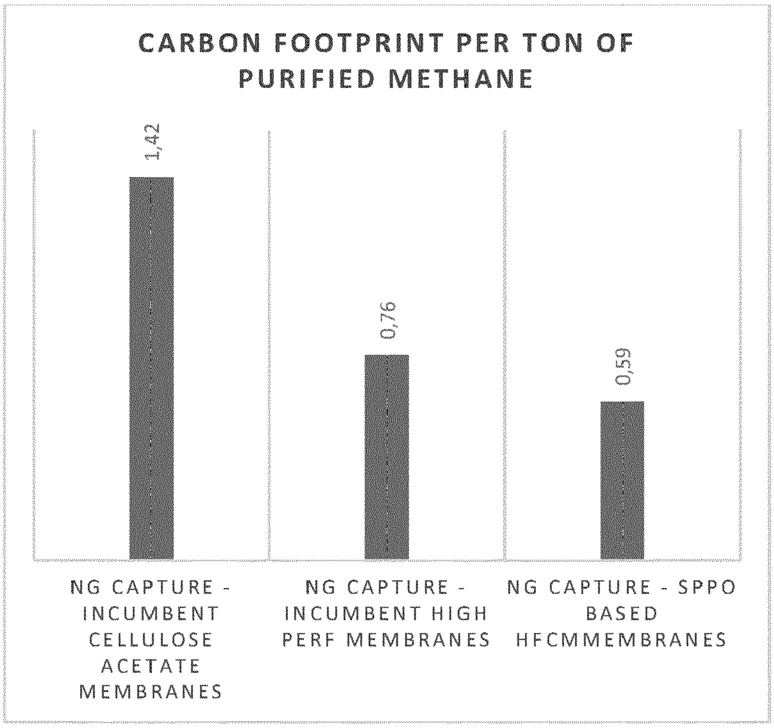
CARBON FOOTPRINT PER TON OF PURIFIED METHANE
1,42
0,76
0,59
NG CAPTURE - INCUMBENT CELLULOSE ACETATE MEMBRANES
NG CAPTURE - INCUMBENT HIGH PERF MEMBRANES
NG CAPTURE - SPPO BASED HFCMMEMBRANES

Europäisches Patentamt
European Patent Office
Office européen des brevets

# EUROPEAN SEARCH REPORT

Application Number
EP 21 18 0050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIKI YOSHIMUNE ET AL: "CO2/CH4 Mixed Gas Separation Using Carbon Hollow Fiber Membranes", ENERGY PROCEDIA, vol. 37, 1 January 2013 (2013-01-01), pages 1109-1116, XP055624750, NL ISSN: 1876-6102, DOI: 10.1016/j.egypro.2013.05.208 * the whole document * ----- | 1-15 | INV. B01D67/00 B01D53/22 B01D69/08 B01D71/02 |
| X | YOSHIMUNE M ET AL: "Flexible carbon hollow fiber membranes derived from sulfonated poly(phenylene oxide)", SEPARATION AND PURIFICATION TECHNOLOGY, ELSEVIER SCIENCE, AMSTERDAM, NL, vol. 75, no. 2, 13 October 2010 (2010-10-13), pages 193-197, XP027322843, ISSN: 1383-5866 [retrieved on 2010-08-14] * the whole document * ----- | 1-15 | TECHNICAL FIELDS SEARCHED (IPC) |
| X | JP 2010 269229 A (NAT INST OF ADVANCED IND SCIEN) 2 December 2010 (2010-12-02) * example 1 * ----- | 1-10 | B01D |
| X | JP 2006 231095 A (NAT INST OF ADV IND & TECHNOL) 7 September 2006 (2006-09-07) * example 3 * ----- | 1-10 | |
| X | JP 2013 094744 A (TOYO BOSEKI) 20 May 2013 (2013-05-20) * example 1 * ----- | 1-10 | |

The present search report has been drawn up for all claims

1

| Place of search | Date of completion of the search | Examiner |
|---|---|---|
| Munich | 1 December 2021 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 18 0050

This annex lists the patent family members relating to the patent documents cited in the above-mentioned European search report. The members are as contained in the European Patent Office EDP file on The European Patent Office is in no way liable for these particulars which are merely given for the purpose of information.

01-12-2021

| Patent document cited in search report | Publication date | Patent family member(s) | Publication date |
|---|---|---|---|
| JP 2010269229 A | 02-12-2010 | JP 4911417 B2<br>JP 2010269229 A | 04-04-2012<br>02-12-2010 |
| JP 2006231095 A | 07-09-2006 | NONE | |
| JP 2013094744 A | 20-05-2013 | JP 5906675 B2<br>JP 2013094744 A | 20-04-2016<br>20-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5348569 A, Bikson


### Non-patent literature cited in the description


- *Ind. Eng. Chem. Res.,* 2002, vol. 41 (6), 1393-1411